# FASCICULE DE BREVET EUROPEEN

(11) **EP 4 041 586 B1**
(45) Date de publication et mention de la délivrance du brevet: **15.11.2023**
(21) Numéro de dépôt: 20793753.3
(22) Date de dépôt: 01.10.2020
(51) Int. Cl.: B60K 17/35, B60K 17/02, B60K 17/16

(54) **ENSEMBLE DE TRANSMISSION DE PUISSANCE ET VEHICULE COMPRENANT CET ENSEMBLE**
KRAFTÜBERTRAGUNGSANORDNUNG UND FAHRZEUG MIT DIESER ANORDNUNG
POWER TRANSMISSION ASSEMBLY AND VEHICLE COMPRISING SAID ASSEMBLY

(30) Priorité: 11.10.2019 FR 1911319
(43) Date de publication de la demande: 17.08.2022
(73) Titulaire: Idee Services, 78740 Evecquemont (FR)
(72) Inventeur: MICHEL, Luc, 78740 EVECQUEMONT (FR)
(74) Mandataire: Plasseraud IP
(86) Numéro de dépôt international: PCT/FR2020/051727
(87) Numéro de publication internationale: WO 2021/069818

(56) Documents cités:
- EP-A1- 2 332 760
- EP-A1- 3 446 908
- WO-A1-2016/162609
- WO-A2-2007/118082
- DE-A1- 10 049 197
- US-A1- 2015 011 347
- US-A1- 2019 063 587
- US-A1- 2019 078 673
- US-A1- 2019 270 379

## Description

### DOMAINE TECHNIQUE

La présente invention est relative à un ensemble de transmission de puissance pour réaliser un véhicule électrique ou un véhicule hybride.

### ETAT DE LA TECHNIQUE ANTERIEURE

Plus particulièrement, l'invention concerne un ensemble de transmission de puissance pour réaliser un véhicule électrique ou un véhicule hybride (comprenant un moteur thermique et un moteur électrique). Par exemple, l'ensemble de transmission de puissance permet de transformer un véhicule thermique en véhicule hybride ou de transformer un véhicule thermique en véhicule électrique.

Par exemple, l'ensemble de transmission de puissance permet de réaliser un véhicule à quatre roues motrices ou de transformer un véhicule à deux roues motrices en un véhicule à quatre roues motrices. Par exemple, l'ensemble de transmission de puissance permet de transformer un véhicule avec un moteur thermique qui actionne l'essieu avant (véhicule de type traction ayant deux roues motrices à l'avant) en un véhicule à quatre roues motrices dans lequel un moteur électrique de cet ensemble est destiné à être relié directement ou indirectement à l'essieu arrière de ce véhicule. Réciproquement, on peut transformer un véhicule thermique de type propulsion en un véhicule à quatre roues motrice, l'ensemble de transmission de puissance étant alors relié directement ou indirectement à l'essieu avant du véhicule.

Notamment, l'ensemble de transmission de puissance comprend :
- une machine électrique comprenant un stator fixe par rapport au véhicule et un rotor mobile en rotation par rapport à un axe de rotation de ladite machine électrique,
- un réducteur connecté au rotor de la machine électrique, ledit réducteur comprenant un premier pignon connecté au rotor et une couronne (105b), le premier pignon et la couronne étant des engrenages coniques à 45°, disposés à 90° l'un de l'autre, et
- un élément de transmission relié à la couronne du réducteur, pour transmettre la puissance motrice et la rotation de la machine électrique à d'autres éléments du véhicule ou inversement, et notamment à une ou plusieurs roues.

Une machine électrique peut être pilotée pour être dans un mode de moteur électrique dans lequel la puissance électrique est transformée en puissance mécanique de rotation, ou inversement dans un mode de générateur électrique dans lequel la puissance mécanique de rotation est transformée en puissance électrique. Dans ce dernier cas, la machine se transforme en frein à récupération d'énergie sous forme électrique, cette énergie électrique pouvant bien sûr être stockée dans des batteries du véhicule.

Par exemple, le brevet US 8 672 068 propose un ensemble de transmission de puissance de ce type.

Cet ensemble est directement installé dans l'essieu arrière, et l'axe de rotation du moteur électrique est coaxial avec l'arbre transversal du pont arrière du véhicule.

Par ailleurs, le document DE 100 49 197 A1 montre un ensemble de transmission de puissance pour véhicule comprenant :
- une machine électrique comprenant un stator fixe par rapport au véhicule et un rotor mobile en rotation par rapport à un axe de rotation de ladite machine électrique,
- un réducteur connecté au rotor de la machine électrique, ledit réducteur comprenant un premier pignon connecté au rotor et une couronne, disposés à 90° l'un de l'autre, et
- un élément de transmission relié à la couronne du réducteur dans lequel :
- la machine électrique est une machine inversée dans laquelle le rotor est radialement à l'extérieur du stator par rapport à l'axe de rotation de la machine électrique ,
- le stator de la machine électrique comprend un corps de stator équipé de bobinages sur la périphérie externe dudit stator, et une cavité annulaire entre les bobinages et l'axe de rotation.

Cette architecture complique l'implantation de l'essieu arrière dans le volume disponible à l'arrière du véhicule, et nécessite une conception particulière de cet essieu arrière.

### EXPOSE DE L'INVENTION

La présente divulgation a pour but de proposer une solution plus modulaire de l'implantation d'une machine électrique (moteur/générateur électrique) dans un véhicule, et par exemple à un essieu avant et/ou arrière de véhicule.

A cet effet, la présente divulgation se rapporte à un ensemble de transmission de puissance dans lequel :
- la machine électrique est une machine inversée dans laquelle le rotor est radialement à l'extérieur du stator par rapport à l'axe de rotation de la machine électrique, et dans lequel :
- le stator de la machine électrique comprend un corps de stator équipé de bobinages sur la périphérie externe dudit stator, et une cavité annulaire entre les bobinages et l'axe de rotation, et
dans lequel au moins une partie du réducteur est logée dans la cavité annulaire avec le premier pignon complètement inclut dans la cavité annulaire, et une partie de la couronne qui pénètre dans la cavité annulaire.

La machine électrique de type inversée, avec le rotor à l'extérieur, permet d'augmenter le couple de cette machine électrique à faible vitesse de rotation, et permet d'obtenir un encombrement réduit. Ainsi, la machine électrique est mieux adaptée à un mode de fonctionnement à faible vitesse.

En outre, on obtient un ensemble de transmission de puissance plus compact que dans l'art antérieur (à puissance équivalente), donc plus facile à intégrer pour motoriser un essieu avant et/ou arrière de véhicule.

L'installation de l'ensemble est alors plus facile sur le véhicule, notamment lorsqu'il s'agit de modifier un véhicule de série à deux roues motrices pour le transformer en véhicule à quatre roues motrices ou pour transformer un véhicule thermique en un véhicule électrique ou pour transformer un véhicule thermique en véhicule hybride. En effet, l'installation peut être effectuée en modifiant peu d'éléments de ce véhicule.

En outre, la machine électrique de cet ensemble de transmission de puissance peut :
- soit aider le moteur thermique dans le mode moteur électrique,
- soit freiner le véhicule dans le mode générateur électrique, par exemple tout en rechargeant des batteries.

Grâce à un tel fonctionnement dans lequel on pilote la machine électrique en frein ou en support d'un moteur principal tel qu'un moteur thermique, il est possible d'optimiser le fonctionnement de ce moteur thermique en fonctionnement. Il est aussi possible d'en réduire sa taille. On peut donc réaliser des économies d'énergie substantielles.

Dans divers modes de réalisation de l'ensemble de transmission de puissance selon la présente divulgation, on peut éventuellement avoir recours en outre à l'une et/ou à l'autre des dispositions suivantes.

Selon un aspect, la machine électrique a une forme de cylindre avec un diamètre supérieur à deux fois sa hauteur.

Selon un aspect, le premier pignon a une forme évidée de telle sorte que ce premier pignon entoure au moins partiellement un palier du stator.

Selon un aspect, l'ensemble comprend en outre un coupleur connecté entre la couronne du réducteur et l'élément de transmission, le coupleur étant adapté pour basculer entre un état couplé dans lequel la machine électrique peut actionner l'élément de transmission en rotation et un état découplé dans lequel la machine électrique ne peut pas actionner l'élément de transmission.

Grâce à ce coupleur, la machine électrique peut être découplé de l'élément de transmission, et donc par exemple de l'essieu arrière. On peut alors restreindre l'usage de cette machine électrique à certains modes de fonctionnement du véhicule, par exemple à faible vitesse. On évite ainsi des pertes énergétiques en dehors de ce mode de fonctionnement, et le rendement général du véhicule est amélioré.

Selon un aspect, le rotor comprend :
- un flasque latéral qui s'étend radialement depuis l'axe de rotation, et
- une partie cylindrique portant des aimants de polarités alternées selon la direction circonférentielle de cette partie cylindrique, lesdits aimants faisant faces aux bobinages du stator.

Selon un aspect, le réducteur est constitué de deux engrenages coniques, un premier pignon solidaire du rotor et une couronne solidaire du coupleur.

Selon un aspect, l'ensemble comprend en outre une plaque support fixée au stator, ladite plaque support comprenant une ouverture traversée par au moins une partie du réducteur.

Selon un aspect, la plaque support comprend au moins un passage électrique adapté pour passer des conducteurs d'alimentation électrique du stator, et au moins un passage de fluide adapté pour former un canal refroidissement du stator par circulation d'un fluide.

Selon un aspect, l'ensemble comprend en outre une électronique de puissance pour alimenter le stator, ladite électronique de puissance étant fixée sur la plaque support.

Selon un aspect, le coupleur est un crabot ou un embrayage, ledit coupleur étant actionné par action mécanique, hydraulique ou électrique.

Selon un aspect, l'ensemble comprend en outre :
- un deuxième coupleur relié à l'élément de transmission, et
- un deuxième réducteur connecté au deuxième coupleur.

Selon un aspect, l'ensemble comprend en outre un différentiel destiné à être couplé à un essieu du véhicule, et l'élément de transmission est monté solidaire de du boitier du différentiel.

Selon un aspect, la plaque support comprend un premier côté sur lequel est fixé la machine électrique et un deuxième côté sur lequel est fixé le différentiel.

Selon un aspect, l'élément de transmission est monté solidaire d'un arbre de transfert destiné à transmettre une puissance entre un premier moteur du véhicule et un différentiel d'un essieu arrière du véhicule.

La divulgation se rapporte également à **un véhicule** comprenant :
- un essieu avant,
- un essieu arrière, et
- un ensemble de transmission de puissance du type précédent, l'élément de transmission de cet ensemble étant relié directement ou indirectement à l'essieu avant et/ou à l'essieu arrière du véhicule.

Dans divers modes de réalisation du véhicule selon la présente divulgation, on peut éventuellement avoir recours en outre à l'une et/ou à l'autre des dispositions suivantes.

Selon un aspect, l'essieu avant est couplé à un premier moteur, et l'ensemble de transmission est relié à l'essieu arrière pour obtenir un véhicule à quatre roues motrices.

Selon un aspect, l'essieu arrière est couplé à un premier moteur, et l'ensemble de transmission est relié à l'essieu avant pour obtenir un véhicule à quatre roues motrices.

Selon un aspect, l'axe de rotation de la machine électrique est parallèle à l'axe vertical du véhicule.

Selon un aspect, la machine électrique est logée dans un volume réservé pour une roue de secours sous le châssis du véhicule.

Selon un aspect, l'ensemble comprend en outre un coupleur, et le coupleur est mis dans un état découplé si la vitesse du véhicule est supérieure à une vitesse limite, adaptée au mode de fonctionnement du véhicule.

### BREVE DESCRIPTION DES DESSINS

D'autres caractéristiques et avantages de la divulgation apparaîtront au cours de la description suivante d'un de ses modes de réalisation, donné à titre d'exemple non limitatif, en regard des dessins joints.

Sur les dessins :
- la figure 1 est une vue de dessus schématique d'un véhicule;
- la figure 2 est une vue schématique d'un premier mode de réalisation d'une transmission de puissance ;
- les figures 3 et 4 sont des vues d'un exemple de réalisation de la transmission de puissance de la figure 2 ;
- la figure 5 est une vue schématique d'un deuxième mode de réalisation d'une transmission de puissance ; et
- la figure 6 est une vue schématique d'un troisième mode de réalisation d'une transmission de puissance.

Sur les différentes figures, les mêmes références numériques désignent des éléments identiques ou similaires.

### DESCRIPTION DETAILLEE

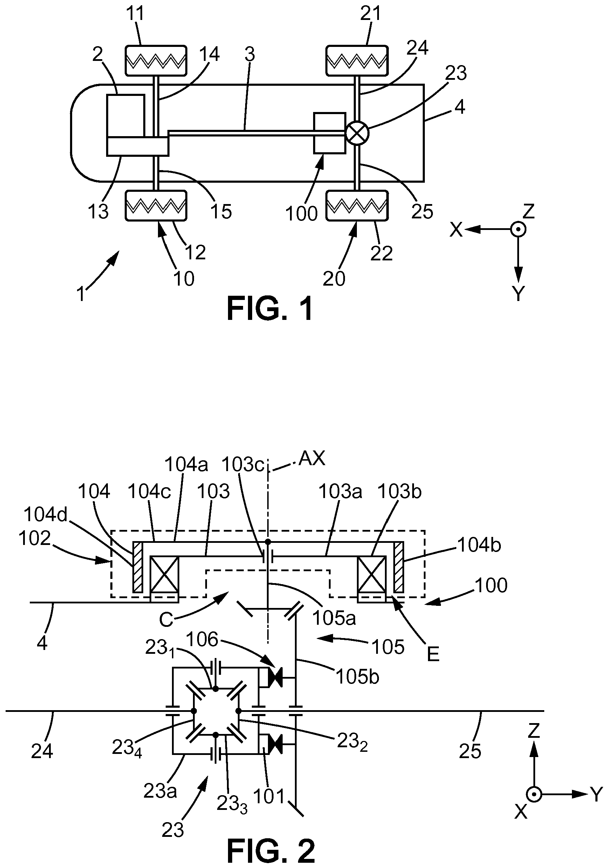

La **figure 1** est une vue de dessus schématique d'un véhicule 1 selon la présente divulgation. Ce véhicule 1 est par exemple, un véhicule à deux essieux, comprenant :
- un châssis 4,
- un essieu avant 10 couplé à un premier moteur 2,
- un essieu arrière 20, et
- un ensemble de transmission de puissance 100 comprenant un élément de transmission 101 relié directement ou indirectement à l'essieu arrière 20.

Dans cet exemple présenté en figure 1, l'essieu avant 10 est couplé à un premier moteur 2. Mais, toutes les variantes évoquées en introduction sont possibles.

Le premier moteur 2 est par exemple un moteur à combustion interne, ou éventuellement un premier moteur électrique.

L'essieu avant 10 comprend une roue à droite 11, une roue à gauche 12, et une unité de traction 13 qui couple le premier moteur aux roues à droite et à gauche 11, 12 par des arbres de traction 14, 15. L'unité de traction 13 comprend par exemple une boite de vitesse, et un dispositif différentiel pour répartir la puissance entre les roues à droite et à gauche de l'essieu avant 10.

L'essieu arrière 20 comprend une roue à droite 21, une roue à gauche 22, et un différentiel 23 pour répartir la puissance entre les roues à droite et à gauche 21,22 de l'essieu arrière 20, par l'intermédiaire d'arbres de propulsion 24, 25.

Optionnellement, le véhicule 1 est initialement un véhicule à quatre roues motrices de type traditionnel, c'est-à-dire un véhicule à quatre roues motrices mues par le premier moteur 2. Le véhicule comprend en outre un arbre de transfert 3 qui couple également l'unité de traction 13 à l'essieu arrière 20 pour délivrer une partie de la puissance motrice du premier moteur 2 aux roues de l'essieu arrière 20. Cet arbre de transfert 3 est habituellement accouplé à une couronne d'engrènement du différentiel 23 par un pignon conique.

D'autres éléments mécaniques sont usuellement introduits dans une telle chaîne mécanique, notamment par exemple des cardans pour permettre des mouvements de roues, et divers autres accouplements et mécanismes...

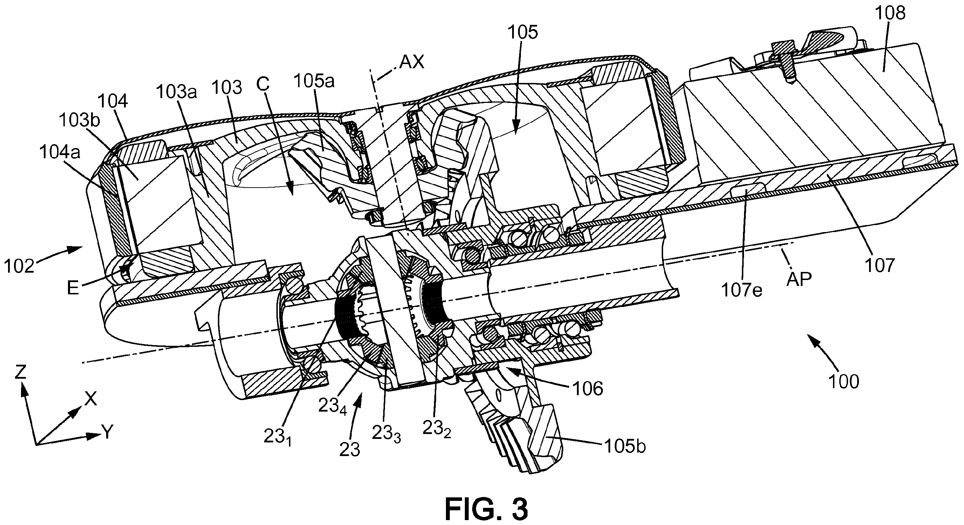

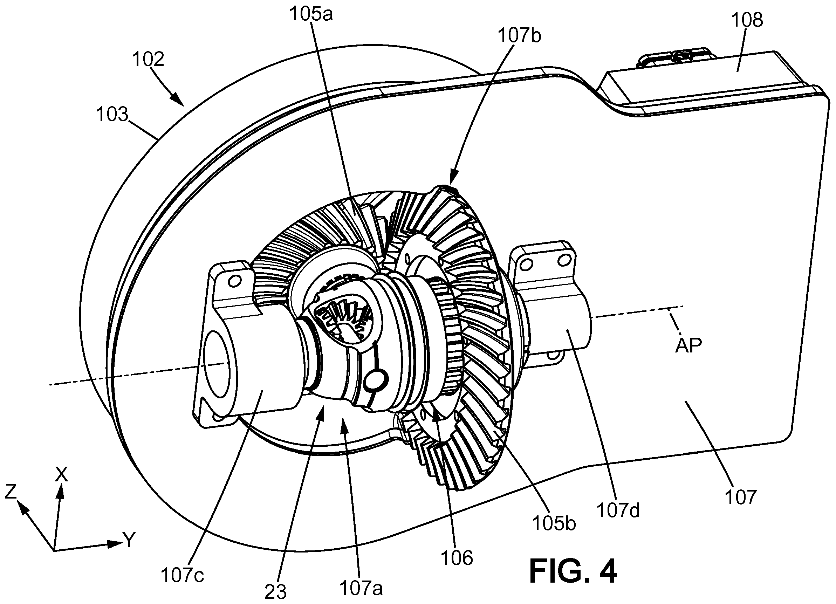

Les **figures 2 à 4** montrent **un premier mode de réalisation** d'un ensemble de transmission de puissance 100 selon la présente divulgation, dans lequel l'élément de transmission 101 est relié au différentiel 23 du véhicule 1. La figure 2 est une vue schématique permettant de comprendre le fonctionnement, et les figures 3 et 4 représentent un exemple de réalisation de ce mode de réalisation de l'ensemble de transmission de puissance 100.

En figure 2, le différentiel 23 est représenté tel qu'il est usuellement réalisé pour un essieu arrière 20 de véhicule, mais il pourrait avoir une autre forme. Ce différentiel 23 comprend un boîtier 23a qui enferme quatre pignons coniques 23₁, 23₂, 23₃, 23₄ disposés à 90° l'un de l'autre, et qui s'engrènent deux à deux. Deux pignons coniques 23₁, 23₃ se faisant face sont articulés libres en rotation par rapport au boîtier 23a. Les deux autres pignons coniques 23₂, 23₄ sont reliés respectivement aux arbres de propulsion 25, 24 de l'essieu arrière 20.

Le boîtier 23a du différentiel est souvent équipé d'une couronne d'entrée (un engrenage conique de diamètre supérieur au boîtier 23a pour fournir une entrée primaire de puissance, i.e. pour introduire la puissance motrice.

Ici, le boîtier 23a est solidaire de l'élément de transmission 101 de l'ensemble de transmission de puissance 100.

L'ensemble de transmission de puissance 100 comprend alors :
- une machine électrique 102 comprenant un stator 103 fixe par rapport au châssis 4 du véhicule 1 et un rotor 104 mobile en rotation par rapport à un axe de rotation AX de la machine électrique 102, et
- un réducteur 105 connecté au rotor 104 de la machine électrique.

Le réducteur 105 est lui-même composé d'un premier pignon 105a connecté au rotor 104 et d'une couronne 105b. Par exemple, le premier pignon 105a et la couronne 105b sont des engrenages coniques à 45°, disposés à 90° l'un de l'autre. Le réducteur 105 correspond à l'entrée primaire de l'ensemble de transmission.

La couronne 105b est alors en liaison pivot avec un arbre, tel que par exemple un des arbres de propulsion 24, 25.

**La machine électrique 102 de cet ensemble de transmission 100 selon la divulgation est** en fait par exemple apte à fonctionner en mode moteur et/ou en mode générateur électrique. Cette machine électrique 102 est avantageusement une machine inversée dans laquelle le rotor 104 est radialement à l'extérieur du stator 103 par rapport à l'axe de rotation AX.

Grâce à ces dispositions, l'ensemble de transmission 100 est un dispositif compact, qui est plus modulaire que les essieux hybrides de l'art antérieur. Cet ensemble de transmission 100 est apte à transmettre une puissance motrice électrique à l'essieu arrière 20 avec peu de perte et avec un grand couple.

La machine électrique 102 est un moteur électrique et/ou un générateur électrique. Par exemple, la machine électrique en mode moteur est apte à aider un premier moteur (thermique) du véhicule. Par exemple, la machine électrique en mode générateur est apte à freiner le véhicule, éventuellement en rechargeant des batteries. Cette machine électrique 102 est avantageusement une machine de type synchrone.

Le stator 103 comprend un corps de stator 103a équipé de bobinages 103b sur la périphérie externe de ce stator 103, et un palier 103c sur l'axe de rotation AX de la machine électrique. Comme représenté sur la figure, le palier 103c est par exemple articulé en rotation autour de l'arbre du premier pignon 105a, le premier pignon 105a étant lui-même articulé en rotation autour de l'axe de rotation AX, directement ou indirectement par rapport au châssis 4 du véhicule (non représenté).

Le stator 103 comprend ainsi une cavité annulaire C entre les bobinages 103b et l'axe de rotation AX. Une partie du réducteur 105 est par exemple logée à l'intérieur de cette cavité annulaire C. Dans le mode de réalisation présenté, le premier pignon 105a peut être complètement inclut dans cette cavité annulaire C. Une partie de la couronne 105b peut pénétrer dans cette cavité annulaire C. De cette manière, l'ensemble de transmission 100 est très compact.

La machine électrique 102 a une forme sensiblement d'un cylindre. Par exemple, cette forme de cylindre est très aplatie avec un diamètre supérieur à deux fois sa hauteur, et par exemple un diamètre supérieur à trois ou quatre fois sa hauteur. La cavité annulaire C a alors un rapport de forme (diamètre de cavité x hauteur de cavité) similaire ou identique à celui de la machine électrique 102. Grâce à cette disposition, le premier pignon 105a peut plus facilement être intégralement inclut dans la cavité annulaire C. La couronne 105b peut aussi plus facilement pénétrer au moins partiellement dans la cavité annulaire C.

Grâce à cette forme aplatie, la machine électrique peut être implantée sur véhicule au-dessus du différentiel 23, comme représenté sur les figures, c'est-à-dire entre le différentiel 23 et le châssis du véhicule, avec l'axe de rotation AX parallèle à l'axe vertical Z. La machine électrique 102 est bien logée et protégée sous le véhicule, et elle n'impacte pas la garde au sol.

En outre, la couronne 105b pénètre profondément dans la cavité annulaire C ; les flasques latéraux du stator 103 et du rotor 104 de la machine électrique 102 ont une faible épaisseur de sorte qu'en fait la machine électrique 102 ne prend pas beaucoup plus d'encombrement en direction verticale 2 sous le véhicule que la couronne 105b reliée au différentiel 23. Autrement dit, l'ensemble de transmission 100 et la machine électrique 102 sont compacts, utilisent peu d'espace sous le véhicule et sont facilement implantables sur tout type de véhicule.

Le premier pignon 105a du réducteur 105 a aussi éventuellement une forme évidée de telle sorte que ce premier pignon 105a entoure au moins partiellement le palier 103c du stator. Grâce à cette disposition le premier pignon 105a peut être placé complètement à l'intérieur de la cavité annulaire C et même logé très au fond de la cavité annulaire C. La couronne 105b put alors pénétrer profondément dans la cavité annulaire C. L'ensemble de transmission 100 et la machine électrique 102 sont d'autant plus compacts, utilisent peu d'espace sous le véhicule et sont facilement implantables sur tout type de véhicule.

Le rotor 104 comprend un corps de rotor 104a équipé d'aimants 104b venant en regard des bobinages 103b du stator. Le corps de rotor 104a comprend par exemple un flasque latéral 104c qui s'étend radialement depuis l'axe de rotation AX, et une partie cylindrique 104d externe portant les aimants 104b. Les aimants 104b sont positionnés sur la périphérie interne de ladite partie cylindrique 104d pour faire face aux bobinages 103b, et sont positionnés avec des polarités alternées selon la direction circonférentielle de la circonférence de cette partie cylindrique 104d.

Ainsi, les bobinages 103b sont situés dans la partie interne de la machine électrique 102 (proche de l'axe de rotation AX) et les aimants 104b sont situés dans la partie externe de la machine électrique 102 (à l'extérieur du stator). Or, les bobinages 103b ont un encombrement radial (dans une direction perpendiculaire à l'axe de rotation AX) plus important que les aimants 104b. L'entrefer E de la machine électrique est la zone cylindrique entre le stator 103 et le rotor 104. A diamètre d'entrefer E constant, une machine électrique de type inversé a alors un encombrement radial plus faible et/ou un couple plus élevé en comparaison d'une machine électrique non inversé.

Ainsi, grâce à cette disposition, la machine électrique de la présente divulgation est plus efficace, notamment par rapport à son utilisation dans un véhicule 1 à quatre roues motrices pour une faible vitesse de roulage dudit véhicule.

En outre, l'ensemble de transmission 100 peut comprendre un coupleur 106 entre le réducteur 105 (la couronne 105b) et l'élément de transmission 101.

Le coupleur 106 est adapté pour basculer entre un état couplé dans lequel la machine électrique 102 peut actionner l'élément de transmission 101 en rotation (par l'intermédiaire du réducteur 105 et du coupleur 106) et un état découplé dans lequel la machine électrique 102 ne peut pas actionner l'élément de transmission 101.

Le coupleur 106 est donc un élément d'accouplement mécanique entre deux éléments qui peut être piloté. Ce coupleur est par exemple un système à crabot ou un embrayage. Le coupleur 106 peut être actionné par action mécanique, hydraulique ou électrique (non représenté sur la figure 2).

Ce coupleur permet ainsi de découpler l'ensemble de transmission 100 lorsqu'il n'est pas utile au roulage du véhicule, ce qui permet d'améliorer le rendement global en supprimant les pertes mécanique de cet ensemble.

En effet, la machine électrique 102 de l'ensemble de transmission 100 ne fonctionne pas, ni en moteur ni en frein lorsque le coupleur 106 est en état découplé. On évite ainsi que la machine électrique 102 tourne inutilement dans des modes de fonctionnement pour lesquels la machine électrique n'est pas utile.

Eventuellement, lorsque plusieurs ensembles de transmission 100 équipent le véhicule, il est possible d'en coupler ou découpler mécaniquement un ou plusieurs, selon les besoins. Ainsi, la transmission de puissance du véhicule est plus efficace et bien plus modulaire que les dispositifs des essieux hybrides de l'art antérieur.

Dans l'exemple de réalisation des figures 3 et 4, les références numériques désignent des éléments identiques ou similaires à celles de la figure 2, mais de nouveaux détails ou des variantes de l'ensemble de transmission de puissance 100 sont visibles.

Sur ces figures, les arbres de propulsion 24, 25 ne sont pas visibles. Ils doivent prendre place sur l'axe de propulsion AP.

Ces figures montrent que l'ensemble de transmission de puissance 100 comprend en outre une plaque support 107 sur laquelle est fixé le stator 103 de la machine électrique 102.

Cette plaque support 107 comprend une ouverture 107a traversée par au moins une partie du réducteur 105 : La couronne 105b d'axe, l'axe de propulsion AP perpendiculaire à l'axe de rotation AX du rotor 104, traverse cette ouverture 107a. L'ouverture 107a comprend éventuellement une découpe 107b adaptée à la forme de la couronne 105b pour cette traversée.

Ainsi, la plaque support 107 comprend un premier côté sur lequel est fixé la machine électrique 102, et un deuxième côté opposé au premier côté sur lequel est fixé le différentiel 23, par exemple par l'intermédiaire de supports 107c, 107d comprenant des paliers dans lesquels les arbres de propulsion sont montés en rotation.

Dans cet exemple, l'ensemble de transmission de puissance 100 comprend en outre une électronique de puissance 108 enfermée dans un boîtier d'ensemble fixé sur la plaque support 107, par exemple sur le même côté que la machine électrique 102 (le premier côté).

La plaque support 107 comprend alors au moins un passage électrique (non représenté) adapté pour passer des conducteurs d'alimentation électrique du stator 103 de la machine électrique.

Selon des variantes, la plaque support 107 comprend également au moins un passage de fluide 107e adapté pour former un canal de refroidissement. Ce canal et le fluide permettent de refroidir le stator et/ou l'électronique de puissance 108. Des dispositifs de pompage sont pilotés pour contrôler la circulation de ce fluide dans le passage de fluide.

Sur ces figures, l'électronique de puissance 108 est positionnée à côté de la machine électrique, dans la direction Y, direction de l'axe de propulsion AP.

Cette électronique de puissance 108 peut éventuellement être placée sur le deuxième côté, par exemple autour du différentiel 23.

Selon des variantes, cette électronique de puissance 108 est placée dans la cavité C sur le corps de stator 103 ou dans la plaque support 107.

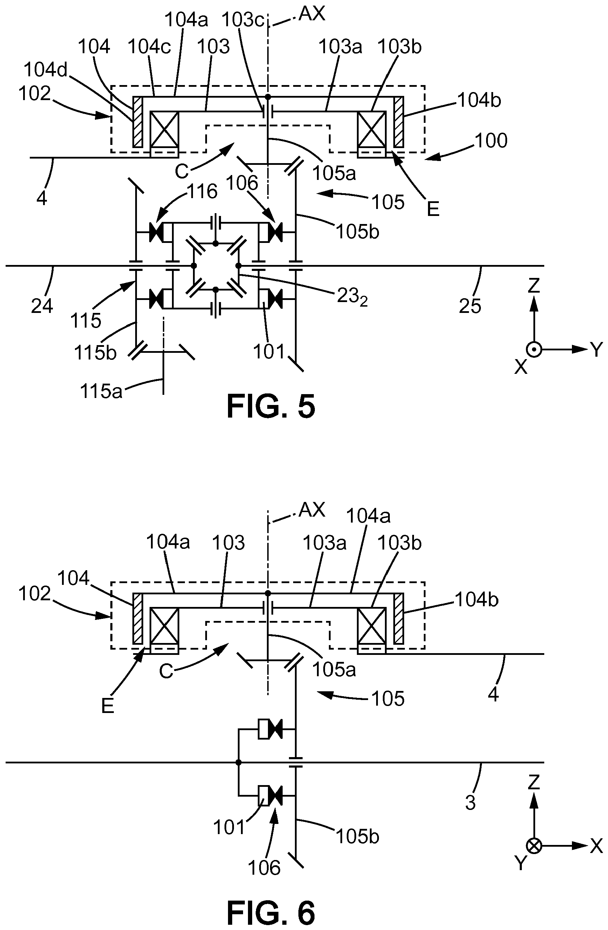

La **figure 5** montre une vue schématique d'un **deuxième mode de réalisation** d'un ensemble de transmission de puissance 100 selon la présente divulgation, comprenant en outre :
- un deuxième coupleur 116 relié directement ou indirectement (de manière solidaire) à l'élément de transmission 101, et
- un deuxième réducteur 115 connecté au deuxième coupleur 116 pour fournir une entrée secondaire de puissance à l'ensemble de transmission de puissance 100.

Le deuxième réducteur 115 est lui-même par exemple composé d'une deuxième couronne 115b connectée au deuxième coupleur 116 et d'un deuxième pignon 115a. Par exemple, le deuxième pignon 115a et la deuxième couronne 115b sont des engrenages coniques à 45°, disposés à 90° l'un de l'autre, comme représenté sur la figure.

Le deuxième pignon 115a est alors par exemple connecté à un arbre, tel qu'un arbre de transfert 3 pour recevoir une puissance d'un premier moteur 2.

Le deuxième coupleur 116 est adapté pour basculer entre un état couplé dans lequel le deuxième réducteur 115 peut actionner l'élément de transmission 101 en rotation et un état découplé dans lequel le deuxième réducteur 115 ne peut pas actionner l'élément de transmission 101.

Le deuxième coupleur 116 est donc un élément d'accouplement pilotable comme le coupleur 106. Il peut être du même type ou différent.

Il permet de fournir divers modes de fonctionnement à l'ensemble de transmission de puissance 100.

Grâce à ces dispositions, l'ensemble de transmission dispose d'une entrée secondaire de puissance. Cet ensemble de transmission de puissance 100 peut être intégré à un véhicule dans lequel cette entrée secondaire est mue par le premier moteur 2, et la machine électrique 102 permet de remplacer ou compléter cette puissance d'entrainement.

Ainsi, le coupleur 106 permet d'accoupler la machine électrique et le deuxième coupleur 116 permet d'accoupler le premier moteur 2. L'ensemble de transmission de puissance 100 peut être :
- soit un ensemble de transmission de puissance électrique si seul le coupleur 106 est en état couplé,
- soit un ensemble de transmission de puissance du premier moteur si seul le deuxième coupleur 116 est en état couplé,
- soit un ensemble de transmission de puissance combiné si les deux coupleurs 106, 116 sont en état couplés.

La **figure 6** montre une vue schématique d'**un troisième mode de réalisation** d'un ensemble de transmission de puissance 100 selon la présente divulgation, dans lequel l'élément de transmission 101 est relié à l'arbre de transfert 3 du véhicule 1.

Dans cette figure, les références numériques désignent des éléments identiques ou similaires à celles des figures précédentes.

**L'ensemble de transmission de puissance 100 selon la divulgation** comprend les mêmes éléments, et notamment une machine électrique 102, et un réducteur 105. L'élément de transmission 101 est ici rendu solidaire de l'arbre de transfert 3. La machine électrique 102 est une machine inversée dans laquelle le rotor 104 est radialement à l'extérieur du stator 103 par rapport à l'axe de rotation AX.

Grâce à ces dispositions, l'ensemble de transmission 100 est un dispositif compact, et apte à transmettre une puissance motrice électrique à l'arbre de transfert 3 avec peu de perte et avec un grand couple.

De même, le moteur électrique 102 est un moteur électrique et/ou un générateur électrique. Par exemple, la machine électrique en mode moteur est apte à aider un premier moteur (thermique) du véhicule. Par exemple, la machine électrique en mode générateur est apte à freiner le véhicule, éventuellement en rechargeant des batteries. Cette machine électrique est avantageusement une machine de type synchrone. Le stator comprend un corps de stator 103a équipé de bobinages 103b sur la périphérie externe du stator, et comprend une cavité annulaire C entre les bobinages 103b et l'axe de rotation AX. Une partie du réducteur 105 est logée dans cette cavité C. Notamment, le premier pignon 105a peut être complètement inclus dans la cavité annulaire C, et la couronne 105b pénètre dans cette cavité annulaire C. Ainsi, l'ensemble de transmission 100 est très compact. Le rotor 104 comprend un corps de rotor 104a équipé d'aimants 104b, ces aimants venant en regard des bobinages 103b.

Ainsi, grâce à cette disposition, la machine électrique 102 de la présente divulgation est plus efficace, notamment par rapport à son utilisation dans un véhicule 1 à quatre roues motrices pour une faible vitesse de roulage dudit véhicule.

Eventuellement, l'ensemble de transmission 100 comprend un coupleur 106 qui a la même fonction que dans le premier mode de réalisation, ce qui permet d'améliorer le rendement global du véhicule.

Ainsi, l'ensemble de transmission 100 selon les modes de réalisations présentés ci-dessus peut être intégré dans tout type de véhicule. Par exemple, il peut être intégré dans un véhicule à quatre roues motrices, en étant relié de manière directe (premier et deuxième modes de réalisation) ou de manière indirecte (troisième mode de réalisation) à l'essieu arrière 20 de ce véhicule.

Selon une variante, grâce à la compacité de la machine électrique 102 (notamment sa compacité dans la direction de l'axe de rotation AX), la machine électrique est orienté sur le véhicule dans une direction parallèle à l'axe vertical 2 du véhicule, c'est-à-dire de telle sorte que l'axe de rotation AX soit parallèle à cet axe vertical Z. Cette disposition diffère totalement des implantations des moteurs électriques de l'art antérieur, qui sont usuellement orienté dans l'axe transversal Y ou longitudinal X du véhicule 1.

Grâce à sa forme aplatie et compacte, la machine électrique 102 peut donc être implantée ou logée sous le véhicule entre le différentiel 23 et le châssis du véhicule, avec son axe de rotation AX en direction verticale. Dans cette implantation, la machine électrique 102 n'entoure pas l'arbre de transfert 3, ni un arbre de traction 14, 15 ou un arbre de propulsion 24,25. Cette implantation est donc plus modulaire.

En outre, il est alors possible de loger la machine électrique 102 dans un volume du châssis 4 habituellement réservé pour une roue de secours.

Ainsi, il est possible de monter un ensemble de transmission de puissance 100 dans un véhicule de série (non à quatre roues motrices) pour le transformer en véhicule à quatre roues motrices ou pour transformer un véhicule thermique en véhicule électrique ou pour transformer un véhicule thermique en véhicule hybride avec un fonctionnement alterné ou combiné afin d'optimiser le rendement du moteur thermique. Les deux roues de l'essieu avant 10 étant motorisées par le premier moteur du véhicule, et les deux roues de l'essieu arrière 20 étant alors motorisées par la machine électrique 102 de l'ensemble de transmission de puissance 100.

Enfin, le coupleur 106 sera avantageusement piloté par le véhicule 1 (son électronique) pour qu'il soit en état découplé si la vitesse du véhicule est supérieure à une vitesse limite. Cette vitesse limite est adaptée au mode de fonctionnement du véhicule. Elle peut être par exemple de 50 km ou 110 km/h.

Par exemple, la vitesse limite est de 50 km/h. Ainsi, le véhicule 1 est éventuellement dans un mode quatre roues motrices seulement en dessous de cette vitesse limite. Cela correspond bien à l'usage habituel du mode quatre roues motrices. A plus haute vitesse, le véhicule 1 est dans un mode deux roues motrices (celles de l'essieu avant 10), mais grâce au coupleur 106, la transmission de puissance 100 ne pénalise pas le rendement du véhicule 1 dans ce mode de fonctionnement.

Par exemple, la vitesse limite est de 110 km/h. Ainsi, le véhicule 1 est éventuellement dans un mode électrique ou hybride seulement en dessous de cette vitesse limite. A plus haute vitesse, le véhicule 1 est dans un mode thermique, mais grâce au coupleur 106, la transmission de puissance 100 ne pénalise pas le rendement du véhicule 1 dans ce mode de fonctionnement.

## Revendications

1. **Ensemble de transmission de puissance (100)** pour véhicule comprenant :
- une machine électrique (102) comprenant un stator (103) fixe par rapport au véhicule et un rotor (104) mobile en rotation par rapport à un axe de rotation (AX) de ladite machine électrique,
- un réducteur (105) connecté au rotor de la machine électrique, ledit réducteur comprenant un premier pignon (105a) connecté au rotor et une couronne (105b), le premier pignon et la couronne étant des engrenages coniques à 45°, disposés à 90° l'un de l'autre, et
- un élément de transmission (101) relié à la couronne du réducteur,
dans lequel :
- la machine électrique (102) est une machine inversée dans laquelle le rotor est radialement à l'extérieur du stator par rapport à l'axe de rotation de la machine électrique,
- le stator (103) de la machine électrique comprend un corps de stator (103a) équipé de bobinages (103b) sur la périphérie externe dudit stator, et une cavité annulaire (C) entre les bobinages et l'axe de rotation, l'ensemble étant **caractérisée en ce que** au moins une partie du réducteur est logée dans la cavité annulaire (C) avec le premier pignon (105a) complètement inclut dans la cavité annulaire, et une partie de la couronne (105b) qui pénètre dans la cavité annulaire.

2. Ensemble selon la revendication 1, dans lequel la machine électrique a une forme de cylindre avec un diamètre supérieur à deux fois sa hauteur.

3. Ensemble selon la revendication 1 ou la revendication 2, dans lequel le premier pignon (105a) a une forme évidée de telle sorte que ce premier pignon (105a) entoure au moins partiellement un palier (103c) du stator.

4. Ensemble selon l'une des revendications 1 à 3, comprenant en outre :
- un coupleur (106) connecté entre la couronne du réducteur et l'élément de transmission (101), le coupleur étant adapté pour basculer entre un état couplé dans lequel la machine électrique peut actionner l'élément de transmission en rotation et un état découplé dans lequel la machine électrique ne peut pas actionner l'élément de transmission.

5. Ensemble selon l'une des revendications 1 à 4, dans lequel le rotor comprend :
- un flasque latéral (104a) qui s'étend radialement depuis l'axe de rotation, et
- une partie cylindrique (104d) portant des aimants de polarités alternées selon la direction circonférentielle de cette partie cylindrique, lesdits aimants faisant faces aux bobinages du stator.

6. Ensemble selon la revendication 4 ou la revendication 5, dans lequel le réducteur (105) est constitué de deux engrenages coniques, un premier pignon (105a) solidaire du rotor et une couronne (105b) solidaire du coupleur (106).

7. Ensemble selon l'une des revendications 1 à 6, comprenant en outre une plaque support (107) fixée au stator, ladite plaque support comprenant une ouverture traversée par au moins une partie du réducteur.

8. Ensemble selon la revendication 7, dans lequel la plaque support comprend au moins un passage électrique adapté pour passer des conducteurs d'alimentation électrique du stator, et au moins un passage de fluide adapté pour former un canal refroidissement du stator par circulation d'un fluide.

9. Ensemble selon l'une des revendications 1 à 8, comprenant en outre une électronique de puissance (108) pour alimenter le stator, ladite électronique de puissance étant fixée sur la plaque support.

10. Ensemble selon l'une des revendications 1 à 9, dans lequel le coupleur est un crabot ou un embrayage, ledit coupleur étant actionné par action mécanique, hydraulique ou électrique.

11. Ensemble selon l'une des revendications 1 à 10, comprenant en outre :
- un deuxième coupleur (116) relié à l'élément de transmission (101), et
- un deuxième réducteur (115) connecté au deuxième coupleur (116).

12. Ensemble selon l'une des revendications 1 à 11, comprenant en outre un différentiel (23) destiné à être couplé à un essieu du véhicule, et dans lequel l'élément de transmission (101) est monté solidaire de du boîtier (23a) du différentiel.

13. Ensemble selon la revendication 7 et la revendication 12, dans lequel la plaque support (107) comprend un premier côté sur lequel est fixé la machine électrique et un deuxième côté sur lequel est fixé le différentiel.

14. Ensemble selon l'une des revendications 1 à 11, dans lequel l'élément de transmission (101) est monté solidaire d'un arbre de transfert (3) destiné à transmettre une puissance entre un premier moteur du véhicule et un différentiel d'un essieu arrière du véhicule.

15. **Véhicule (1)** comprenant :
- un essieu avant (10),
- un essieu arrière (20), et
- un ensemble de transmission de puissance (100) selon l'une des revendications 1 à 13, l'élément de transmission (101) de cet ensemble étant relié directement ou indirectement à l'essieu avant et/ou à l'essieu arrière du véhicule.

16. Véhicule selon la revendication 15, dans lequel :
- l'essieu avant (10) est couplé à un premier moteur, et l'ensemble de transmission (100) est relié à l'essieu arrière (20) pour obtenir un véhicule à quatre roues motrices, ou
- l'essieu arrière (20) est couplé à un premier moteur, et l'ensemble de transmission (100) est relié à l'essieu avant (10) pour obtenir un véhicule à quatre roues motrices.

17. Véhicule selon la revendication 15 ou la revendication 16, dans lequel l'axe de rotation (AX) de la machine électrique est parallèle à l'axe vertical du véhicule.

18. Véhicule selon l'une des revendications 15 à 17, dans lequel la machine électrique (102) est logée dans un volume réservé pour une roue de secours sous le châssis du véhicule.

19. Véhicule selon l'une des revendications 15 à 18, dans lequel l'ensemble comprend en outre un coupleur selon la revendication 2, et le coupleur (106) est mis dans un état découplé si la vitesse du véhicule est supérieure à une vitesse limite, adaptée au mode de fonctionnement du véhicule.

## Patentansprüche

1. **Kraftübertragungsanordnung** (100) für ein Fahrzeug, umfassend:
- eine elektrische Maschine (102), umfassend einen Stator (103), der in Bezug auf das Fahrzeug feststehend ist, und einen Rotor (104), der in Bezug auf eine Drehachse (AX) der elektrischen Maschine drehbeweglich ist,
- ein Untersetzungsgetriebe (105), das mit dem Rotor der elektrischen Maschine verbunden ist, wobei das Untersetzungsgetriebe ein mit dem Rotor verbundenes erstes Ritzel (105a) und einen Kranz (105b) umfasst, wobei das erste Ritzel und der Kranz 45°-Kegelräder sind, die in einem Winkel von 90° zueinander angeordnet sind, und
- ein Übertragungselement (101), das mit dem Kranz des Untersetzungsgetriebes verbunden ist, wobei:
- die elektrische Maschine (102) eine Umkehrmaschine ist, wobei der Rotor in Bezug auf die Drehachse der elektrischen Maschine radial außerhalb des Stators liegt,
- wobei der Stator (103) der elektrischen Maschine einen Statorkörper (103a) umfasst, der mit Wicklungen (103b) am Außenumfang des Stators versehen ist, und einen ringförmigen Hohlraum (C) zwischen den Wicklungen und der Drehachse umfasst,
wobei die Anordnung **dadurch gekennzeichnet ist, dass** wenigstens ein Teil des Untersetzungsgetriebes in dem ringförmigen Hohlraum (C) aufgenommen ist, wobei das erste Ritzel (105a) vollständig in dem ringförmigen Hohlraum enthalten ist und ein Teil des Kranzes (105b) in den ringförmigen Hohlraum hineinragt.

2. Anordnung nach Anspruch 1, wobei die elektrische Maschine eine Zylinderform mit einem Durchmesser von mehr als dem Zweifachen ihrer Höhe aufweist.

3. Anordnung nach Anspruch 1 oder 2, wobei das erste Zahnrad (105a) eine vertiefte Form aufweist, so dass dieses erste Zahnrad (105a) wenigstens teilweise ein Lager (103c) des Stators umgibt.

4. Anordnung nach einem der Ansprüche 1 bis 3, ferner umfassend:
- eine Kopplung (106), die zwischen dem Kranz des Untersetzungsgetriebes und dem Übertragungselement (101) angeschlossen ist, wobei die Kopplung dazu ausgebildet ist, zwischen einem gekoppelten Zustand, in dem die elektrische Maschine das Übertragungselement in Drehung versetzen kann, und einem entkoppelten Zustand, in dem die elektrische Maschine das Übertragungselement nicht in Drehung versetzen kann, umzuschalten.

5. Anordnung nach einem der Ansprüche 1 bis 4, wobei der Rotor umfasst:
- einen seitlichen Flansch (104a), der sich radial von der Drehachse erstreckt, und
- einen zylindrischen Teil (104d), der Magnete mit alternierenden Polaritäten entlang der Umfangsrichtung dieses zylindrischen Teils trägt, wobei die Magnete den Wicklungen des Stators zugewandt sind.

6. Anordnung nach Anspruch 4 oder 5, wobei das Untersetzungsgetriebe (105) aus zwei Kegelrädern besteht, einem ersten Ritzel (105a), das fest mit dem Rotor verbunden ist, und einem Kranz (105b), der fest mit der Kopplung (106) verbunden ist.

7. Anordnung nach einem der Ansprüche 1 bis 6, ferner umfassend eine am Stator befestigte Trägerplatte (107), wobei die Trägerplatte eine Öffnung aufweist, durch die wenigstens ein Teil des Getriebes verläuft.

8. Anordnung nach Anspruch 7, wobei die Trägerplatte wenigstens einen elektrischen Durchgang umfasst, der dazu ausgebildet ist, Leiter zur elektrischen Versorgung des Stators zu führen, und wenigstens einen Fluiddurchgang umfasst, der dazu ausgebildet ist, einen Kanal zur Kühlung des Stators durch Zirkulation eines Fluids zu bilden.

9. Anordnung nach einem der Ansprüche 1 bis 8, ferner umfassend eine Leistungselektronik (108) zur Versorgung des Stators, wobei die Leistungselektronik an der Trägerplatte befestigt ist.

10. Anordnung nach einem der Ansprüche 1 bis 9, wobei die Kopplung ein Mitnehmer oder eine Kupplung ist, wobei die Kopplung mechanisch, hydraulisch oder elektrisch betätigt wird.

11. Anordnung nach einem der Ansprüche 1 bis 10, ferner umfassend:
- eine zweite Kopplung (116), die mit dem Übertragungselement (101) verbunden ist, und
- ein zweites Untersetzungsgetriebe (115), das mit der zweiten Kopplung (116) verbunden ist.

12. Anordnung nach einem der Ansprüche 1 bis 11, ferner umfassend ein Differential (23), das dazu bestimmt ist, mit einer Achse des Fahrzeugs gekoppelt zu werden, und wobei das Übertragungselement (101) fest mit dem Gehäuse (23a) des Differentials verbunden ist.

13. Anordnung nach Anspruch 7 und Anspruch 12, wobei die Trägerplatte (107) eine erste Seite umfasst, auf der die elektrische Maschine befestigt ist, und eine zweite Seite umfasst, auf der das Differential befestigt ist.

14. Anordnung nach einem der Ansprüche 1 bis 11, wobei das Übertragungselement (101) fest mit einer Transmissionswelle (3) verbunden ist, die dazu bestimmt ist, Leistung zwischen einem ersten Motor des Fahrzeugs und einem Differential einer Hinterachse des Fahrzeugs zu übertragen.

15. **Fahrzeug** (1), umfassend:
- eine Vorderachse (10),
- eine Hinterachse (20), und
- eine Kraftübertragungsanordnung (100) nach einem der Ansprüche 1 bis 13, wobei das Übertragungselement (101) dieser Anordnung direkt oder indirekt mit der Vorderachse und/oder der Hinterachse des Fahrzeugs verbunden ist.

16. Fahrzeug nach Anspruch 15, wobei:
- die Vorderachse (10) mit einem ersten Motor gekoppelt ist und die Kraftübertragungsanordnung (100) mit der Hinterachse (20) verbunden ist, um ein Fahrzeug mit Allradantrieb zu erhalten, oder
- die Hinterachse (20) mit einem ersten Motor gekoppelt ist und die Kraftübertragungsanordnung (100) mit der Vorderachse (10) verbunden ist, um ein Fahrzeug mit Allradantrieb zu erhalten.

17. Fahrzeug nach Anspruch 15 oder Anspruch 16, wobei die Drehachse (AX) der elektrischen Maschine parallel zur vertikalen Achse des Fahrzeugs verläuft.

18. Fahrzeug nach einem der Ansprüche 15 bis 17, wobei die elektrische Maschine (102) in einem für ein Reserverad reservierten Raum unter dem Fahrgestell des Fahrzeugs untergebracht ist.

19. Fahrzeug nach einem der Ansprüche 15 bis 18, wobei die Anordnung ferner eine Kopplung nach Anspruch 2 umfasst und die Kopplung (106) in einen entkoppelten Zustand gebracht wird, wenn die Geschwindigkeit des Fahrzeugs höher als eine an den Betriebsmodus des Fahrzeugs angepasste Grenzgeschwindigkeit ist.

## Claims

1. **Power transmission assembly (100)** for a vehicle comprising:
- an electric machine (102) comprising a stator (103) fixed relative to the vehicle and a rotor (104) movable in rotation relative to a rotation axis (AX) of said electric machine,
- a gear reducer (105) connected to the rotor of the electric machine, said gear reducer comprising a first pinion (105a) connected to the rotor and a ring gear (105b), the first pinion and the ring gear being 45° bevel pinions, arranged at 90° from each other, and
- a transmission element (101) linked to the ring gear of the gear reducer,
wherein:
- the electric machine (102) is an inverted machine in which the rotor is radially outside the stator with respect to the rotation axis of the electric machine,
- the stator (103) of the electric machine comprises a stator body (103a) provided with windings (103b) on the outer periphery of said stator, and an annular cavity (C) between the windings and the rotation axis,
the assembly being **characterized in that** at least a part of the gear reducer is housed in the annular cavity (C) with the first pinion (105a) completely included in the annular cavity, and a part of the ring gear (105b) which enters the annular cavity.

2. Assembly according to claim 1, wherein the electric machine has the shape of a cylinder with a diameter greater than twice the height thereof.

3. Assembly according to claim 1 or claim 2, wherein the first pinion (105a) has a recessed shape in such a way that this first pinion (105a) at least partially surrounds a bearing (103c) of the stator.

4. Assembly according to one of claims 1 to 3, further comprising:
- a coupler (106) connected between the ring gear of the gear reducer and the transmission element (101), the coupler being adapted to switch between a coupled state in which the electric machine can actuate the transmission element in rotation and an uncoupled state in which the electrical machine cannot actuate the transmission element.

5. Assembly according to one of claims 1 to 4, wherein the rotor comprises:
- a lateral flange (104a) which extends radially from the rotation axis, and
- a cylindrical part (104d) carrying magnets having alternating polarities in the circumferential direction of this cylindrical part, said magnets facing the windings of the stator.

6. Assembly according to claim 4 or claim 5, wherein the gear reducer (105) consists of two bevel pinions, a first pinion (105a) integral with the rotor and a ring gear (105b) integral with the coupler (106).

7. Assembly according to one of claims 1 to 6, further comprising a support plate (107) fixed to the stator, said support plate comprising an opening through which at least a part of the gear reducer passes.

8. Assembly according to claim 7, wherein the support plate comprises at least one electrical passage adapted to let electrical supply conductors supplying the stator through, and at least one fluid passage adapted to form a cooling channel of the stator by circulation of a fluid.

9. Assembly according to one of claims 1 to 8, further including a power electronics device (108) for supplying the stator, said power electronics device being fixed to the support plate.

10. Assembly according to one of claims 1 to 9, wherein the coupler is a dog coupling or a clutch, said coupler being actuated by mechanical, hydraulic or electrical action.

11. Assembly according to one of claims 1 to 10, further comprising:
- a second coupler (116) linked to the transmission element (101), and
- a second gear reducer (115) connected to the second coupler (116).

12. Assembly according to one of claims 1 to 11, further comprising a differential (23) intended to be coupled to an axle of the vehicle, and in which the transmission element (101) is mounted integral with the casing (23a) of the differential.

13. Assembly according to claim 7 and claim 12, wherein the support plate (107) comprises a first side on which the electrical machine is fixed and a second side on which the differential is fixed.

14. Assembly according to one of claims 1 to 11, wherein the transmission element (101) is mounted integral with a transfer shaft (3) intended to transmit power between a first motor of the vehicle and a differential of a rear axle of the vehicle.

15. **Vehicle (1)** comprising:
- a front axle (10),
- a rear axle (20), and
- a power transmission assembly (100) according to one of claims 1 to 13, the transmission element (101) of this assembly being directly or indirectly linked to the vehicle front axle and/or rear axle.

16. Vehicle according to claim 15, wherein:
- the front axle (10) is coupled to a first motor, and the transmission assembly (100) is linked to the rear axle (20) so as to obtain a four-wheel drive vehicle, or
- the rear axle (20) is coupled to a first motor, and the transmission assembly (100) is linked to the front axle (10) so as to obtain a four-wheel drive vehicle.

17. A vehicle according to claim 15 or claim 16, wherein the rotation axis (AX) of the electric machine is parallel to the vehicle vertical axis.

18. Vehicle according to one of claims 15 to 17, wherein the electric machine (102) is housed in a space reserved for a spare wheel under the vehicle chassis.

19. Vehicle according to one of claims 15 to 18, wherein the assembly further comprises a coupler according to claim 2, and the coupler (106) is placed in an uncoupled state if the speed of the vehicle is greater than a limit speed, adapted to the operating mode of the vehicle.
